(19) Europäisches Patentamt
European Patent Office
Office européen des brevets

(11) EP 4 089 122 A1

(12) **EUROPEAN PATENT APPLICATION**
published in accordance with Art. 153(4) EPC

(43) Date of publication:
**16.11.2022 Bulletin 2022/46**

(21) Application number: **21738041.9**

(22) Date of filing: **06.01.2021**

(51) International Patent Classification (IPC):
***C08F 24/00*** *(2006.01)* ***C09D 127/12*** *(2006.01)*
***H01B 3/44*** *(2006.01)* ***C09D 7/20*** *(2018.01)*

(52) Cooperative Patent Classification (CPC):
**C08F 24/00; C08F 34/02; C09D 7/20; C09D 127/12; H01B 3/44; H01B 17/56**

(86) International application number:
**PCT/JP2021/000255**

(87) International publication number:
**WO 2021/141062 (15.07.2021 Gazette 2021/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.01.2020 JP 2020001644**

(71) Applicant: **Daikin Industries, Ltd.**
**Osaka-shi, Osaka 530-8323 (JP)**

(72) Inventors:
- **TANAKA, Yoshito**
  **Osaka-shi, Osaka 530-8323 (JP)**
- **MATSUURA, Makoto**
  **Osaka-shi, Osaka 530-8323 (JP)**
- **SUZUKI, Yuuki**
  **Osaka-shi, Osaka 530-8323 (JP)**
- **OGATA, Akitoshi**
  **Osaka-shi, Osaka 530-8323 (JP)**
- **KISHIKAWA, Yosuke**
  **Osaka-shi, Osaka 530-8323 (JP)**
- **YOSHIMOTO, Hiroyuki**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **INSULATING FILM OR DIELECTRIC FILM**

(57) An object of the present disclosure is to provide an insulating film or dielectric film comprising a fluoropolymer and having electrical insulation and hardness. The present disclosure relates to an insulating film or dielectric film comprising a fluoropolymer, wherein the fluoropolymer comprises, as a main component, a monomer unit represented by formula (1):

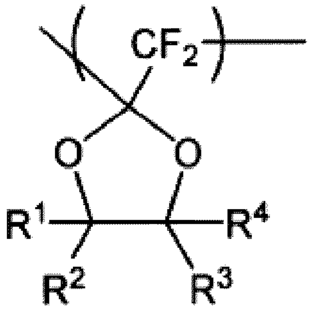

(1)

wherein
$R^1$ to $R^4$ are each independently a fluorine atom, a fluoroalkyl group, or a fluoroalkoxy group.

EP 4 089 122 A1

## Description

### Technical Field

The present disclosure relates to an insulating film or dielectric film; an electrical article containing the insulating film or dielectric film; a coating agent for forming the insulating film or dielectric film; and the like.

### Background Art

Printed circuit boards, semiconductor substrates (wafers), and the like comprising various insulating films or dielectric films are currently used as electronic components or in the process of manufacturing electronic components (Patent Literature (PTL) 1). Although fluoropolymer films are also considered as insulating films or dielectric films, improvements in physical properties in terms of, for example, insulation, hardness, and transparency are required.

### Citation List

### Patent Literature

PTL 1: JP2002-038075A

### Summary of Invention

### Technical Problem

An object of the present disclosure is to provide an insulating film or dielectric film comprising a fluoropolymer, and having electrical insulation and hardness. Another object of the present disclosure is to provide a coating agent for forming the insulating film or dielectric film. Still another object of the present disclosure is to provide an electrical article comprising an insulating film or dielectric film comprising a fluoropolymer (an electrical product or a component of the electrical product).

### Solution to Problem

The present disclosure includes the following embodiments.

Item 1. An insulating film or dielectric film comprising a fluoropolymer,
wherein

the fluoropolymer comprises, as a main component, a monomer unit represented by formula (1):

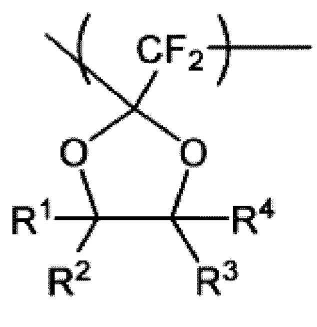

(1)

wherein
$R^1$ to $R^4$ are each independently a fluorine atom, a fluoroalkyl group, or a fluoroalkoxy group.

Item 2. The insulating film or dielectric film according to Item 1, wherein the fluoropolymer further comprises a fluoroolefin unit.
Item 3. The insulating film or dielectric film according to Item 2, wherein the fluoroolefin unit is at least one member selected from the group consisting of a fluorine-containing perhaloolefin unit, a vinylidene fluoride unit, a trifluoroethylene unit, a pentafluoropropylene unit, and a 1,1,1,2-tetrafluoro-2-propylene unit.

Item 4. The insulating film or dielectric film according to Item 3, wherein the fluorine-containing perhaloolefin unit is at least one member selected from the group consisting of a chlorotrifluoroethylene unit, a tetrafluoroethylene unit, a hexafluoropropylene unit, a perfluoro(methyl vinyl ether) unit, a perfluoro(ethyl vinyl ether) unit, a perfluoro(propyl vinyl ether) unit, a perfluoro(butyl vinyl ether) unit, and a perfluoro(2,2-dimethyl-1,3-dioxol) unit.
Item 5. The insulating film or dielectric film according to Item 2, wherein the fluoroolefin unit is at least one member selected from the group consisting of a chlorotrifluoroethylene unit, a tetrafluoroethylene unit, a hexafluoropropylene unit, a perfluoro(methyl vinyl ether) unit, and a perfluoro(propyl vinyl ether) unit.
Item 6. The insulating film or dielectric film according to any one of Items 1 to 5, wherein the film has an average film thickness of 10 nm or more.
Item 7. The insulating film or dielectric film according to any one of Items 1 to 6, wherein the film has

a relative permittivity at 6 GHz of 1.5 or more and 2.5 or less;
a dielectric dissipation factor at 6 GHz of 0.0002 or less;
an indentation elastic modulus of 2.5 GPa or more and 10 GPa or less;
an indentation hardness of 250 $N/mm^2$ or more and 1000 $N/mm^2$ or less; and
a glass transition temperature of 110°C or higher.

Item 8. The insulating film or dielectric film according to Item 7, wherein the film has a dielectric dissipation factor at 6 GHz of 0.00005 or more and 0.0002 or less.
Item 9. The insulating film or dielectric film according to any one of Items 1 to 8, wherein the film has a volume resistivity of $1.0 \times 10^{15}$ Ω·cm or more.
Item 10. The insulating film or dielectric film according to any one of Items 1 to 9, wherein the film has a total light transmittance of 90% or more.
Item 11. The insulating film or dielectric film according to any one of Items 1 to 10, wherein the film is for an electrical article or for a signal wire covering material.
Item 12. The insulating film or dielectric film according to Item 11, wherein the film is for an electrical article, and the electrical article is a semiconductor.
Item 13. The insulating film or dielectric film according to Item 11, wherein the film is for an electrical article, and the electrical article is a printed circuit board.
Item 14. An electrical article comprising the insulating film or dielectric film of any one of Items 1 to 13.
Item 15. A coating agent for forming the insulating film or dielectric film of any one of Items 1 to 13, the coating agent comprising a fluoropolymer and an aprotic solvent,
wherein

the fluoropolymer comprises, as a main component, a monomer unit represented by formula (1):

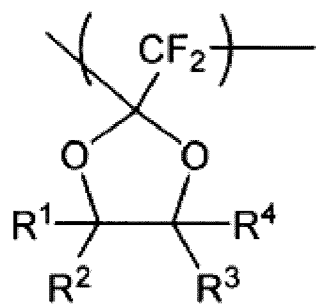

(1)

wherein $R^1$ to $R^4$ are each independently a fluorine atom, a fluoroalkyl group, or a fluoroalkoxy group.

Item 16. The coating agent according to Item 15, wherein the content of the fluoropolymer is 20 mass% or more and 65 mass% or less based on the total mass of the coating agent.
Item 17. The coating agent according to Item 15 or 16, wherein the aprotic solvent is at least one solvent selected from the group consisting of perfluoroaromatic compounds, perfluorotrialkylamines, perfluoroalkanes, hydrofluorocarbons, perfluorocyclic ethers, hydrofluoroethers, and olefin compounds containing at least one chlorine atom.
Item 18. The coating agent according to any one of Items 15 to 17, wherein the aprotic solvent is at least one hydrofluoroether.

Advantageous Effects of Invention

According to the present disclosure, an insulating film or dielectric film comprising a fluoropolymer and having insulation and hardness can be provided. According to the present disclosure, a coating agent for forming the insulating film or dielectric film can be provided.

Description of Embodiments

The above summary of the present disclosure is not intended to describe each disclosed embodiment or every implementation of the present disclosure.
The description of the present disclosure that follows more specifically provides examples of illustrative embodiments.
In several places throughout the present disclosure, guidance is provided through lists of examples, and these examples can be used in various combinations.
In each instance, the provided list serves only as a representative group and should not be interpreted as an exclusive list.
All publications, patents, and patent applications cited herein are incorporated herein by reference in their entirety.

Terms

Unless otherwise specified, the symbols and abbreviations used in this specification can be assumed to have their ordinary meanings used in the technical field to which the present disclosure pertains, as understood from the context of the specification.
The terms "containing" and "comprising" as used herein are intended to include the meanings of the phrase "consisting essentially of" and the phrase "consisting of."
Unless otherwise specified, the steps, treatments, or operations described in the present specification can be performed at room temperature. In the present specification, room temperature can refer to a temperature within the range of 10 to 40°C.
In the present specification, the phrase "$C_n$-$C_m$" (wherein n and m are each a number) indicates that the number of carbon atoms is n or more and m or less, as a person skilled in the art would generally understand.
In the present specification, the expression "thickness" or simply "film thickness" with respect to a film means an average film thickness. The "average film thickness" is determined as follows.

Average Film Thickness

The average film thickness is the average value of a thickness measured 5 times with a micrometer. When measuring the thickness of a film itself is difficult, such as when a film formed on a base material of a substrate etc. cannot be peeled off, the average film thickness is calculated by measuring the thickness of the base material before film formation and the thickness of the base material after film formation 5 times each with a micrometer, and subtracting the average value of the thickness before film formation from the average value of the thickness after film formation.
When the measurement cannot be performed with a micrometer, the film thickness obtained by measuring the line profile of the cut surface of a film to be measured with an atomic force microscope (AFM) is defined as the average film thickness.
Specifically, the average film thickness is a value determined by the method described in a specific example of the present disclosure.
In the present specification, the simple expression "molecular weight" means mass average molecular weight. The mass average molecular weight is determined as follows.

Mass Average Molecular Weight

The mass average molecular weight is measured by using the following GPC analysis method. Specifically, the mass average molecular weight is a value determined by the method described in a specific example of the present disclosure.

GPC Analysis Method

Sample Preparation Method

A polymer is dissolved in perfluorobenzene to prepare a 2 mass% polymer solution, and the polymer solution is passed through a membrane filter (0.22 μm) to obtain a sample solution.

Measurement Method

Standard sample for measurement of molecular weight: polymethyl methacrylate

Detection method: RI (differential refractometer)

In the present specification, the "indentation hardness" and "indentation elastic modulus" are determined as follows.

Indentation Hardness and Indentation Elastic Modulus

The indentation hardness ($H_{IT}$; indentation hardness) of a sample is measured using an ENT-2100 ultra-fine hardness tester produced by Nanotec Corporation. The indentation elastic modulus is also measured at the same time. The test is performed by adjusting the indentation depth to be 1/10 or less of the thickness. Specifically, the indentation hardness and indentation elastic modulus are values determined by the method described in a specific example of the present disclosure.

In the present specification, the "relative permittivity" and "dielectric dissipation factor" are determined as follows.

Relative Permittivity and Dielectric Dissipation Factor

The relative permittivity and dielectric dissipation factor at frequencies of 10 GHz or more (e.g., 10, 20, 28, 60, and 80 GHz) are determined by a split-cylinder resonator method. A resonator corresponding to each frequency produced by KANTO Electronic Application and Development Inc. is used as the split cylinder, and a Keysight N5290A is used as the network spectrum analyzer. For measurement at less than 20 GHz, a film with a thickness of 100 μm, a width of 62 mm, and a length of 75 mm is used as the sample to be measured, and for measurement at 20 GHz or more, a film with a thickness of 100 μm, a width of 34 mm, and a length of 45 mm is used as the sample to be measured. The measurement temperature is 25°C. Specifically, the relative permittivity and dielectric dissipation factor are values determined by the method described in a specific example of the present disclosure.

The relative permittivity and dielectric dissipation factor at 6 GHz are measured using a cavity resonator produced by KANTO Electronic Application and Development Inc. The sample is formed into a cylinder shape (2 mm dia. × 110 mm).

The real part of the complex relative permittivity is determined from the change in the resonance frequency indicated by the cavity resonator, and the imaginary part of the complex relative permittivity is determined from the change in the Q value. The relative permittivity and dielectric dissipation factor are then calculated according to the following formulas. Specifically, the relative permittivity and dielectric dissipation factor are values determined by the method described in a specific example of the present disclosure.

$$\varepsilon_r^* = \varepsilon_r' - j\varepsilon_r''$$

$$\varepsilon_r' = \varepsilon_r$$

$$\varepsilon_r'' = \varepsilon_r \tan\delta$$

$$\tan\delta = \frac{\varepsilon_r''}{\varepsilon_r'}$$

In the formulas, $\varepsilon_r^*$ represents a complex relative permittivity, $\varepsilon_r'$ represents a relative permittivity, $\varepsilon_r''$ represents

a relative dielectric loss factor, and tan δ represents a dielectric dissipation factor.

The relative permittivity and the dielectric dissipation factor at 1 kHz are values determined by the following measurements.

Aluminum was deposited on both surfaces of a film *in vacuo* to prepare each sample. The electrostatic capacity and dielectric dissipation factor of the sample were measured at 25°C at a frequency of 1 kHz using an LCR meter. The relative permittivity was calculated based on the electrostatic capacity of each sample. Specifically, the values are determined by the method described in a specific example of the present disclosure.

In this document, "volume resistivity" is determined as follows.

Volume resistivity

The sample is sandwiched between the lower and upper electrodes provided in a thermostatic chamber, and an electric field of 50 V/pm is applied to the film with a digital super insulation/microcurrent meter (DSM-8104; produced by Hioki Electric Co., Ltd.). The leakage current is measured and the volume resistivity at 25°C is calculated. Specifically, the value is determined by the method described in a specific example of the present disclosure.

In the present specification, the "total light transmittance" and "haze" are determined as follows.

Measurement Method for Total Light Transmittance and Haze

The total light transmittance and haze are measured using an NDH 7000SPII haze meter (produced by Nippon Denshoku Industries Co., Ltd.) in accordance with JIS K7136 (haze value) and JIS K7361-1 (total light transmittance). A film with an average film thickness of 100 μm is used as the sample to be measured. Specifically, the total light transmittance and haze are values determined by the method described in a specific example of the present disclosure.

In the present specification, the "transmittance" at a specific wavelength is determined as follows.

Transmittance at Each Wavelength

The transmittance at a specific wavelength of a sample is measured using a Hitachi U-4100 spectrophotometer. A film with an average film thickness of 100 μm is used as the sample. An integrating sphere detector is used as the detector. Specifically, the transmittance is a value determined by the method described in a specific example of the present disclosure.

In the present specification, the "water absorption rate" is determined as follows.

Water Absorption Rate (24°C)

The water absorption rate is determined according to the following formula, wherein W0 represents the weight of a sample that has been sufficiently dried beforehand, and W24 represents the weight of the sample measured 24 hours after being fully immersed in 24°C water whose mass is 100 times the mass of W0 or more.

$$\text{Water absorption rate (\%)} = 100 \times (W24 - W0)/W0$$

Specifically, the water absorption rate is a value determined by the method described in a specific example of the present disclosure.

Water Absorption Rate (60°C)

The water absorption rate is determined according to the following formula, wherein W0 represents the weight of a sample that has been sufficiently dried beforehand, and W24 represents the weight of the sample measured 24 hours after being fully immersed in 60°C water whose mass is 100 times the mass of W0 or more.

$$\text{Water absorption rate (\%)} = 100 \times (W24 - W0)/W0$$

Specifically, the water absorption rate is a value determined by the method described in a specific example of the present disclosure.

In the present specification, the "tensile elastic modulus" is determined as follows.

Tensile Elastic Modulus

A sample (length: 30 mm, width: 5 mm, thickness: 0.1 mm) is measured with a DVA220 dynamic viscoelasticity measuring device produced by IT Measurement Control Co., Ltd. under the conditions of a tensile mode, a grip width of 20 mm, a measurement temperature of 25°C to 150°C, a temperature-increasing rate of 2°C/min, and a frequency of 1 Hz. The elastic modulus value at 25°C is defined as a tensile elastic modulus. Specifically, the tensile elastic modulus is a value determined by the method described in a specific example of the present disclosure.
In the present specification, the "tensile strength" is determined as follows.

Tensile Strength

The tensile strength of a sample is measured using an AGS-100NX autograph produced by Shimadzu Corporation. The sample is cut into a dumbbell shape 5B as stated in JIS K 7162. The measurement is performed under the conditions of a chuck-to-chuck distance of 12 mm, a crosshead speed of 1 mm/min, and room temperature. Specifically, the tensile strength is a value determined by the method described in a specific example of the present disclosure.
In the present specification, the "thermal decomposition temperature" is determined as follows.

Thermal Decomposition Temperature

The temperatures at which the mass loss percentage of a sample becomes 0.1% and 5% are measured at a temperature-increasing rate of 10°C/minute in an air atmosphere using a thermogravimetric-differential thermal analyzer (Hitachi High-Tech Science Corporation; STA7200). Specifically, the thermal decomposition temperature is a value determined by the method described in a specific example of the present disclosure.
In the present specification, the "glass transition temperature" is determined as follows.

Glass Transition Temperature (Tg)

The temperature is increased (first run), decreased, and then increased (second run) at 10°C/minute in the temperature range of 30°C or higher and 200°C or lower using a DSC (differential scanning calorimeter; Hitachi High-Tech Science Corporation, DSC7000). The midpoint of the endothermic curve in the second run is determined to be the glass transition temperature (°C). Specifically, the glass transition temperature is a value determined by the method described in a specific example of the present disclosure.
In the present specification, the "coefficient of linear expansion" is determined as follows.

Coefficient of Linear Expansion

The temperature of a sample is increased from room temperature to 150°C (1st up), decreased to room temperature, and then increased to 150°C (2nd up) at 2°C/minute using a thermomechanical analyzer (TMA8310; produced by Rigaku Corporation). The average coefficient of linear expansion at 25°C or higher and 80°C or lower in the 2nd up is determined and defined as the coefficient of linear expansion. Specifically, the coefficient of linear expansion is a value determined by the method described in a specific example of the present disclosure.
In the present specification, unless otherwise specified, examples of "alkyl" include linear or branched $C_1$-$C_{10}$ alkyl, such as methyl, ethyl, propyl, isopropyl, butyl, isobutyl, sec-butyl, tert-butyl, pentyl, isopentyl, neopentyl, hexyl, heptyl, octyl, nonyl, and decyl.
In the present specification, unless otherwise specified, "fluoroalkyl" is alkyl in which at least one hydrogen atom is replaced with a fluorine atom. "Fluoroalkyl" can be linear or branched fluoroalkyl.
The number of carbon atoms in "fluoroalkyl" can be, for example, 1 to 12, 1 to 6, 1 to 5, 1 to 4, 1 to 3, 6, 5, 4, 3, 2, or 1.
The number of fluorine atoms in "fluoroalkyl" can be 1 or more (e.g., 1 to 3, 1 to 5, 1 to 9, 1 to 11, or 1 to the maximum substitutable number).
"Fluoroalkyl" includes perfluoroalkyl.
"Perfluoroalkyl" is alkyl in which all hydrogen atoms are replaced with fluorine atoms.
Examples of perfluoroalkyl include trifluoromethyl ($CF_3$-), pentafluoroethyl ($C_2F_5$-), heptafluoropropyl ($CF_3CF_2CF_2$-), and heptafluoroisopropyl ($(CF_3)_2CF$-).
Specific examples of "fluoroalkyl" include monofluoromethyl, difluoromethyl, trifluoromethyl ($CF_3$-), 2,2,2-trifluoroethyl ($CF_3CH_2$-), perfluoroethyl ($C_2F_5$-), tetrafluoropropyl (e.g., $HCF_2CF_2CH_2$-), hexafluoropropyl (e.g., $(CF_3)_2CH$-), perfluorobutyl (e.g., $CF_3CF_2CF_2CF_2$-), octafluoropentyl (e.g., $HCF_2CF_2CF_2CF_2CH_2$-), perfluoropentyl (e.g., $CF_3CF_2CF_2CF_2CF_2$-), perfluorohexyl (e.g., $CF_3CF_2CF_2CF_2CF_2CF_2$-), and the like.
In the present specification, unless otherwise specified, "alkoxy" can be a group represented by RO-, wherein

R is alkyl (e.g., $C_1$-$C_{10}$ alkyl).

Examples of "alkoxy" include linear or branched $C_1$-$C_{10}$ alkoxy, such as methoxy, ethoxy, propoxy, isopropoxy, butoxy, isobutoxy, sec-butoxy, tert-butoxy, pentyloxy, isopentyloxy, neopentyloxy, hexyloxy, heptyloxy, octyloxy, nonyloxy, and decyloxy.

In the present specification, unless otherwise specified, "fluoroalkoxy" is alkoxy in which at least one hydrogen atom is replaced with a fluorine atom. "Fluoroalkoxy" can be linear or branched fluoroalkoxy.

The number of carbon atoms in "fluoroalkoxy" can be, for example, 1 to 12, 1 to 6, 1 to 5, 1 to 4, 1 to 3, 6, 5, 4, 3, 2, or 1.

The number of fluorine atoms in "fluoroalkoxy" can be 1 or more (e.g., 1 to 3, 1 to 5, 1 to 9, 1 to 11, or 1 to the maximum substitutable number).

"Fluoroalkoxy" includes perfluoroalkoxy.

"Perfluoroalkoxy" is alkoxy in which all hydrogen atoms are replaced with fluorine atoms.

Examples of "perfluoroalkoxy" include trifluoromethoxy ($CF_3O$-), pentafluoroethoxy ($C_2F_5O$-), heptafluoropropoxy ($CF_3CF_2CF_2O$-), and heptafluoroisopropoxy ($(CF_3)_2CFO$-).

Specific examples of "fluoroalkoxy" include monofluoromethoxy, difluoromethoxy, trifluoromethoxy, 2,2,2-trifluoroethoxy ($CF_3CH_2O$-), perfluoroethoxy ($C_2F_5O$-), tetrafluoropropyloxy (e.g. $HCF_2CF_2CH_2O$-), hexafluoropropyloxy (e.g., $(CF_3)_2CHO$-), perfluorobutyloxy (e.g., $CF_3CF_2CF_2CF_2O$-), octafluoropentyloxy (e.g., $HCF_2CF_2CF_2CF_2CH_2O$-), perfluoropentyloxy (e.g., $CF_3CF_2CF_2CF_2CF_2O$-), perfluorohexyloxy (e.g., $CF_3CF_2CF_2CF_2CF_2CF_2O$-), and the like.

<u>Insulating Film or Dielectric Film</u>

One embodiment of the present disclosure is an insulating film or dielectric film comprising a specific fluoropolymer.

The insulating film or dielectric film has excellent insulation based on containing the fluoropolymer.

The insulating film or dielectric film has high hardness based on containing the fluoropolymer.

The insulating film or dielectric film has high transparency based on containing the fluoropolymer.

The insulating film or dielectric film has high light resistance based on containing the fluoropolymer.

The fluoropolymer contained in the insulating film or dielectric film comprises, as a main component, a monomer unit represented by formula (1):

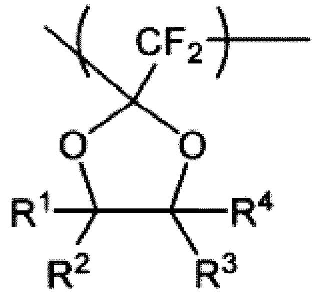

(1)

wherein

$R^1$ to $R^4$ are each independently a fluorine atom, a fluoroalkyl group, or a fluoroalkoxy group (which may be referred to herein as "unit (1)").

In the present specification, phrases such as "comprising a monomer unit as a main component" mean that the percentage of the specific monomer unit is 50 mol% or more based on the total monomer units in a polymer.

The monomer units that constitute the fluoropolymer may comprise one unit (1) or two or more units (1).

The percentage of unit (1) may be, for example, 70 mol% or more, preferably 80 mol% or more, more preferably 90 mol% or more, and particularly preferably 100 mol%, based on the total monomer units of the fluoropolymer.

In each of $R^1$ to $R^4$, fluoroalkyl can be, for example, linear or branched $C_1$-$C_5$ fluoroalkyl, linear or branched $C_1$-$C_4$ fluoroalkyl, linear or branched $C_1$-$C_3$ fluoroalkyl, or $C_1$-$C_2$ fluoroalkyl.

The linear or branched $C_1$-$C_5$ fluoroalkyl is preferably linear or branched $C_1$-$C_5$ perfluoroalkyl.

The linear or branched $C_1$-$C_4$ fluoroalkyl is preferably linear or branched $C_1$-$C_4$ perfluoroalkyl.

The linear or branched $C_1$-$C_3$ fluoroalkyl is preferably linear or branched $C_1$-$C_3$ perfluoroalkyl.

The $C_1$-$C_2$ fluoroalkyl is preferably $C_1$-$C_2$ perfluoroalkyl.

In each of $R^1$ to $R^4$, fluoroalkoxy can be, for example, linear or branched $C_1$-$C_5$ fluoroalkoxy, linear or branched $C_1$-$C_4$ fluoroalkoxy, linear or branched $C_1$-$C_3$ fluoroalkoxy, or $C_1$-$C_2$ fluoroalkoxy.

The linear or branched $C_1$-$C_5$ fluoroalkoxy is preferably linear or branched $C_1$-$C_5$ perfluoroalkoxy.

The linear or branched $C_1$-$C_4$ fluoroalkoxy is preferably linear or branched $C_1$-$C_4$ perfluoroalkoxy.
The linear or branched $C_1$-$C_3$ fluoroalkoxy is preferably linear or branched $C_1$-$C_3$ perfluoroalkoxy.
The $C_1$-$C_2$ fluoroalkoxy is preferably $C_1$-$C_2$ perfluoroalkoxy.
$R^1$ to $R^4$ can be each independently fluorine, linear or branched $C_1$-$C_5$ fluoroalkyl, or linear or branched $C_1$-$C_5$ fluoroalkoxy.
$R^1$ to $R^4$ can be each independently fluorine, linear or branched $C_1$-$C_5$ perfluoroalkyl, or linear or branched $C_1$-$C_5$ perfluoroalkoxy.
$R^1$ to $R^4$ can be each independently fluorine, linear or branched $C_1$-$C_4$ fluoroalkyl, or linear or branched $C_1$-$C_4$ fluoroalkoxy.
$R^1$ to $R^4$ can be each independently fluorine, linear or branched $C_1$-$C_4$ perfluoroalkyl, or linear or branched $C_1$-$C_4$ perfluoroalkoxy.
$R^1$ to $R^4$ can be each independently fluorine, linear or branched $C_1$-$C_3$ fluoroalkyl, or linear or branched $C_1$-$C_3$ fluoroalkoxy.
$R^1$ to $R^4$ can be each independently fluorine, linear or branched $C_1$-$C_3$ perfluoroalkyl, or linear or branched $C_1$-$C_3$ perfluoroalkoxy.
$R^1$ to $R^4$ can be each independently fluorine, $C_1$-$C_2$ fluoroalkyl, or $C_1$-$C_2$ fluoroalkoxy.
$R^1$ to $R^4$ can be each independently fluorine, $C_1$-$C_2$ perfluoroalkyl, or $C_1$-$C_2$ perfluoroalkoxy.
$R^1$ to $R^4$ can be each independently fluorine, trifluoromethyl, pentafluoroethyl, or trifluoromethoxy.
At least one of $R^1$ to $R^4$ can be fluorine, and the other groups in $R^1$ to $R^4$ can be independently $C_1$-$C_2$ perfluoroalkyl or $C_1$-$C_2$ perfluoroalkoxy when two or more such other groups are present.
At least two of $R^1$ to $R^4$ can be fluorine, and the other groups in $R^1$ to $R^4$ can be independently $C_1$-$C_2$ perfluoroalkyl or $C_1$-$C_2$ perfluoroalkoxy when two or more such other groups are present.
At least three of $R^1$ to $R^4$ can be fluorine, and the other group in $R^1$ to $R^4$ can be $C_1$-$C_2$ perfluoroalkyl or $C_1$-$C_2$ perfluoroalkoxy.
At least three of $R^1$ to $R^4$ can be fluorine atoms, and the other group in $R^1$ to $R^4$ can be $C_1$-$C_2$ perfluoroalkyl.
$R^1$ to $R^4$ can be all fluorine atoms.
Unit (1) can be a monomer unit represented by the following formula (1-1) (this unit may be referred to as "unit (1-1)" in the present specification).

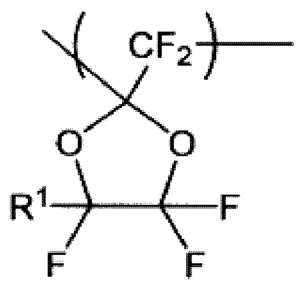

(1-1)

In the formula, $R^1$ is a fluorine atom, a fluoroalkyl group, or a fluoroalkoxy group.
Monomer units that constitute the fluoropolymer may comprise one unit (1-1) or two or more units (1-1).
In unit (1-1), $R^1$ can be fluorine, linear or branched $C_1$-$C_5$ fluoroalkyl, or linear or branched $C_1$-$C_5$ fluoroalkoxy.
In unit (1-1), $R^1$ can be fluorine, linear or branched $C_1$-$C_5$ perfluoroalkyl, or linear or branched $C_1$-$C_5$ perfluoroalkoxy.
In unit (1-1), $R^1$ can be fluorine, linear or branched $C_1$-$C_4$ fluoroalkyl, or linear or branched $C_1$-$C_4$ fluoroalkoxy.
In unit (1-1), $R^1$ can be fluorine, linear or branched $C_1$-$C_4$ perfluoroalkyl, or linear or branched $C_1$-$C_4$ perfluoroalkoxy.
In unit (1-1), $R^1$ can be fluorine, linear or branched $C_1$-$C_3$ fluoroalkyl, or linear or branched $C_1$-$C_3$ fluoroalkoxy.
In unit (1-1), $R^1$ can be fluorine, linear or branched $C_1$-$C_3$ perfluoroalkyl, or linear or branched $C_1$-$C_3$ perfluoroalkoxy.
In unit (1-1), $R^1$ can be fluorine, $C_1$-$C_2$ fluoroalkyl, or $C_1$-$C_2$ fluoroalkoxy.
In unit (1-1), $R^1$ can be fluorine, $C_1$-$C_2$ perfluoroalkyl, or $C_1$-$C_2$ perfluoroalkoxy.
In unit (1-1), $R^1$ can be fluorine, trifluoromethyl, pentafluoroethyl, or trifluoromethoxy.
In unit (1-1), $R^1$ can be $C_1$-$C_2$ perfluoroalkyl or $C_1$-$C_2$ perfluoroalkoxy.
In unit (1-1), $R^1$ can be $C_1$-$C_2$ perfluoroalkyl.
Preferred examples of unit (1-1) include a monomer unit represented by the following formula (1-11) (this monomer unit may be referred to as "unit (1-11)" in the present specification).

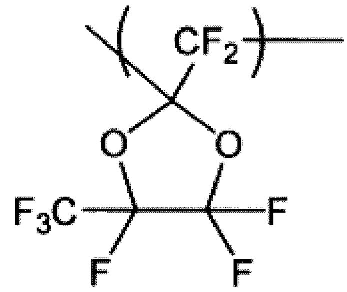

(1-11)

The fluoropolymer may comprise a fluoroolefin unit in addition to unit (1).

The fluoroolefin unit may be used singly or in a combination of two or more.

The percentage of the fluoroolefin unit can be 50 mol% or less, preferably 30 mol% or less, more preferably 20 mol% or less, even more preferably 10 mol% or less, and particularly preferably 0 mol%, based on the total monomer units.

The fluoroolefin unit is a monomer unit that is formed after polymerization of a monomer containing fluorine and a carbon-carbon double bond.

The atoms constituting the fluoroolefin unit may be only fluorine, halogen other than fluorine, carbon, hydrogen, and oxygen.

The atoms constituting the fluoroolefin unit may be only fluorine, halogen other than fluorine, carbon, and hydrogen.

The atoms constituting the fluoroolefin unit may be only fluorine, carbon, and hydrogen.

The atoms constituting the fluoroolefin unit may be only fluorine and carbon.

The fluoroolefin unit includes at least one unit selected from the group consisting of a fluorine-containing perhaloolefin unit, a vinylidene fluoride unit ($-CH_2-CF_2-$), a trifluoroethylene unit ($-CFH-CF_2-$), a pentafluoropropylene unit ($-CFH-CF(CF_3)-$, $-CF_2-CF(CHF_2)-$), a 1,1,1,2-tetrafluoro-2-propylene unit ($-CH_2-CF(CF_3)-$), and the like.

The fluorine-containing perhaloolefin unit is a monomer unit that is formed after polymerization of a monomer containing fluorine and a carbon-carbon double bond, and optionally halogen other than fluorine.

The fluorine-containing perhaloolefin unit includes at least one member selected from the group consisting of a chlorotrifluoroethylene unit ($-CFCl-CF_2-$), a tetrafluoroethylene unit ($-CF_2-CF_2-$), a hexafluoropropylene unit ($-CF_2-CF(CF_3)-$), a perfluoro (methyl vinyl ether) unit ($-CF_2-CF(OCF_3)-$), a perfluoro (ethyl vinyl ether) unit ($-CF_2-CF(OC_2F_5)-$), perfluoro (propyl vinyl ether) unit ($-CF_2-CF(OCF_2C_2F_5)-$), perfluoro(butyl vinyl ether) unit ($-CF_2-CF(O(CF_2)_2C_2F_5)-$), and a perfluoro(2,2-dimethyl-1,3-dioxol) unit (-CF-CAF- (wherein A represents a perfluorodioxolane ring formed with the adjacent carbon atom shown in the formula, with two trifluoromethyl bonded to the carbon atom at position 2 of the dioxolane ring).

The fluoroolefin unit includes at least one member selected from the group consisting of a chlorotrifluoroethylene unit, a tetrafluoroethylene unit, a hexafluoropropylene unit, a perfluoro(methyl vinyl ether) unit, and a perfluoro(propyl vinyl ether) unit.

The fluoropolymer may further contain one or more other monomer units in addition to unit (1) and the fluoroolefin unit. However, it is preferable to contain no other monomer units.

The other monomer units include $CH_2=CHRf$ (wherein Rf represents a $C_1$-$C_{10}$ fluoroalkyl group) units, alkyl vinyl ether units (e.g., a cyclohexyl vinyl ether unit, ethyl vinyl ether unit, butyl vinyl ether unit, and methyl vinyl ether unit), alkenyl vinyl ether units (e.g., a polyoxyethylene allyl ether unit and ethyl allyl ether unit), organosilicon compound units having a reactive $\alpha,\beta$-unsaturated group (e.g., a vinyltrimethoxysilane unit, vinyltriethoxysilane unit, and a vinyltris(methoxyethoxy)silane unit), acrylic ester units (e.g., a methyl acrylate unit and ethyl acrylate unit), methacrylic ester units (e.g., a methyl methacrylate unit and ethyl methacrylate unit), vinyl ester units (e.g., a vinyl acetate unit, vinyl benzoate unit, and a VeoVA (vinyl ester produced by Shell plc) unit), and the like.

The percentage of the other monomer units may be, for example, 0 mol% or more and 20 mol% or less, or 0 mol% or more and 10 mol% or less, based on the total monomer units.

The fluoropolymer preferably has a glass transition temperature (Tg) of 110°C or higher, more preferably 110°C or higher and 300°C or lower, even more preferably 120°C or higher and 300°C or lower, and particularly preferably 125°C or higher and 200°C or lower. A glass transition temperature within these ranges is advantageous in terms of bending durability of the insulating film or dielectric film formed on a flexible substrate.

The fluoropolymer has a mass average molecular weight of, for example, 10,000 or more and 1,000,000 or less, preferably 30,000 or more and 500,000 or less, and more preferably 50,000 or more and 300,000 or less. A molecular weight within these ranges is advantageous in terms of durability.

The fluoropolymer can be produced, for example, by polymerizing one or more monomers corresponding to

the monomer units of the fluoropolymer by an appropriate polymerization method. For example, the fluoropolymer can be produced by polymerizing only one, or two or more types of monomers corresponding to unit (1).

Alternatively, for example, the fluoropolymer can be produced by polymerizing only one, or two or more types of monomers corresponding to unit (1), optionally with one or more other monomers.

A person skilled in the art would be able to understand monomers corresponding to the monomer units of the fluoropolymer. For example, the monomer corresponding to unit (1) is a compound represented by formula (M1):

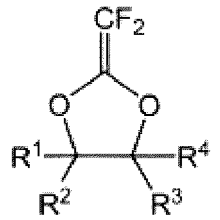

(M1)

(wherein $R^1$ to $R^4$ are as defined above) (this compound may be referred to as "monomer (M1)" in the present specification).

For example, the monomer corresponding to unit (1-1) is a compound represented by formula (M1-1):

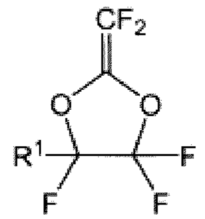

(M1-1)

(wherein $R^1$ is fluorine, fluoroalkyl, or fluoroalkoxy) (this compound may be referred to as "monomer (M1-1)" in the present specification).

For example, the monomer corresponding to unit (1-11) is a compound represented by formula (M1-11):

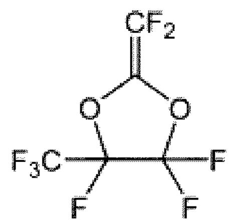

(M1-11)

(this compound may be referred to as "monomer (M1-11)" in the present specification).

The fluoroolefins for use may be monomers corresponding to the fluoroolefin units mentioned above. For example, the monomers corresponding to the tetrafluoroethylene unit, hexafluoropropylene unit, and vinylidene fluoride unit are tetrafluoroethylene ($CF_2$=$CF_2$), hexafluoropropylene ($CF_3CF$=$CF_2$), and vinylidene fluoride ($CH_2$=$CF_2$), respectively. Thus, the details regarding fluoroolefins would be able to be understood by a person skilled in the art from the description of the corresponding fluoroolefin units.

For example, the fluoroolefin may be at least one member selected from the group consisting of fluorine-containing perhaloolefins, vinylidene fluoride, trifluoroethylene, pentafluoropropylene, and 1,1,1,2-tetrafluoro-2-propylene. Preferably, the fluoroolefin may be at least one member selected from the group consisting of chlorotrifluoroethylene, tetrafluoroethylene, hexafluoropropylene, perfluoro(methyl vinyl ether), and perfluoro(propyl vinyl ether).

The fluorine-containing perhaloolefin may be at least one member selected from the group consisting of chlorotrifluoroethylene, tetrafluoroethylene, hexafluoropropylene, perfluoro(methyl vinyl ether), perfluoro(ethyl vinyl ether), perfluoro(propyl vinyl ether), perfluoro(butyl vinyl ether), and perfluoro(2,2-dimethyl-1,3-dioxol) .

The other monomers for use may be monomers corresponding to the other monomer units mentioned above. Thus, the details regarding the other monomers would be able to be understood by a person skilled in the art from the description of the corresponding other monomer units.

The polymerization method includes, for example, a method of using appropriate amounts of monomers corresponding to the monomer units that constitute the fluoropolymer, with the monomers being optionally dissolved or dispersed in a solvent (e.g., an aprotic solvent) and a polymerization initiator being optionally added, and performing polymerization (e.g., radical polymerization, bulk polymerization, solution polymerization, suspension polymerization, dispersion polymerization, or emulsion polymerization).

The polymerization method is preferably solution polymerization because solution polymerization can produce a high-concentration solution of the fluoropolymer and thereby achieve a high manufacturing yield, and is advantageous for the formation of a thick film and purification. Therefore, the fluoropolymer is preferably produced by solution polymerization. The fluoropolymer is more preferably produced by solution polymerization in which one or more monomers are polymerized in the presence of an aprotic solvent.

The solvent for use in solution polymerization of the fluoropolymer is preferably an aprotic solvent. The amount of aprotic solvent for use in the production of the fluoropolymer is, for example, 80 mass% or less, less than 80 mass%, 75 mass% or less, 70 mass% or less, 35 mass% or more and 95 mass% or less, 35 mass% or more and 90 mass% or less, 35 mass% or more and 80 mass% or less, 35 mass% or more and 70 mass% or less, 35 mass% or more and less than 70 mass%, or 60 mass% or more and 80 mass% or less, based on the sum of the mass of the monomers and the mass of the solvent. The amount can be preferably 35 mass% or more and less than 80 mass%, more preferably 40 mass% or more and 75 mass% or less, and particularly preferably 50 mass% or more and 70 mass% or less.

The aprotic solvent for use in the polymerization of fluoropolymers can be, for example, at least one member selected from the group consisting of perfluoroaromatic compounds, perfluorotrialkylamines, perfluoroalkanes, hydrofluorocarbons, perfluorocyclic ethers, hydrofluoroethers, and olefin compounds containing at least one chlorine atom.

The perfluoroaromatic compound is, for example, a perfluoroaromatic compound optionally having one or more perfluoroalkyl groups. The aromatic ring of the perfluoroaromatic compound can be at least one ring selected from the group consisting of a benzene ring, a naphthalene ring, and an anthracene ring. The perfluoroaromatic compound can have one or more (e.g., one, two, or three) aromatic rings.

The perfluoroalkyl group as a substituent is, for example, linear or branched, $C_1$-$C_6$, $C_1$-$C_5$, or $C_1$-$C_4$ perfluoroalkyl, and preferably linear or branched $C_1$-$C_3$ perfluoroalkyl.

The number of substituents is, for example, one to four, preferably one to three, and more preferably one or two. When a plurality of substituents are present, the substituents may be the same or different.

Examples of perfluoroaromatic compounds include perfluorobenzene, perfluorotoluene, perfluoroxylene, and perfluoronaphthalene.

Preferred examples of perfluoroaromatic compounds include perfluorobenzene and perfluorotoluene.

The perfluorotrialkylamine is, for example, an amine substituted with three linear or branched perfluoroalkyl groups. The number of carbon atoms of each perfluoroalkyl group is, for example, 1 to 10, preferably 1 to 5, and more preferably 1 to 4. The perfluoroalkyl groups can be the same or different, and are preferably the same.

Examples of perfluorotrialkylamines include perfluorotrimethylamine, perfluorotriethylamine, perfluorotripropylamine, perfluorotriisopropylamine, perfluorotributylamine, perfluorotri-sec-butylamine, perfluorotri-tert-butylamine, perfluorotripentylamine, perfluorotriisopentylamine, and perfluorotrineopentylamine.

Preferred examples of perfluorotrialkylamines include perfluorotripropylamine and perfluorotributylamine.

The perfluoroalkane is, for example, a linear, branched, or cyclic $C_3$-$C_{12}$ (preferably $C_3$-$C_{10}$, more preferably $C_3$-$C_6$) perfluoroalkane.

Examples of perfluoroalkanes include perfluoropentane, perfluoro-2-methylpentane, perfluorohexane, perfluoro-2-methylhexane, perfluoroheptane, perfluorooctane, perfluorononane, perfluorodecane, perfluorocyclohexane, perfluoro(methylcyclohexane), perfluoro(dimethylcyclohexane) (e.g., perfluoro(1,3-dimethylcyclohexane)), and perfluorodecalin.

Preferred examples of perfluoroalkanes include perfluoropentane, perfluorohexane, perfluoroheptane, and perfluorooctane.

The hydrofluorocarbon is, for example, a $C_3$-$C_8$ hydrofluorocarbon. Examples of hydrofluorocarbons include $CF_3CH_2CF_2H$, $CF_3CH_2CF_2CH_3$, $CF_3CHFCHFC_2F_5$, 1,1,2,2,3,3,4-heptafluorocyclopentane, $CF_3CF_2CF_2CF_2CH_2CH_3$, $CF_3CF_2CF_2CF_2CF_2CHF_2$, and $CF_3CF_2CF_2CF_2CF_2CF_2CH_2CH_3$.

Preferred examples of hydrofluorocarbons include $CF_3CH_2CF_2H$ and $CF_3CH_2CF_2CH_3$.

The perfluorocyclic ether is, for example, a perfluorocyclic ether optionally having one or more perfluoroalkyl groups. The ring of the perfluorocyclic ether may be a 3- to 6-membered ring. The ring of the perfluorocyclic ether may have one or more oxygen atoms as a ring-constituting atom. The ring preferably has one or two oxygen atoms, and more preferably one oxygen atom.

The perfluoroalkyl group as a substituent is, for example, linear or branched $C_1$-$C_6$, $C_1$-$C_5$, or $C_1$-$C_4$ perfluoroalkyl. The perfluoroalkyl group is preferably linear or branched $C_1$-$C_3$ perfluoroalkyl.

The number of substituents is, for example, one to four, preferably one to three, and more preferably one or two. When a plurality of substituents are present, they may be the same or different.

Examples of perfluorocyclic ethers include perfluorotetrahydrofuran, perfluoro-5-methyltetrahydrofuran, perfluoro-5-ethyltetrahydrofuran, perfluoro-5-propyltetrahydrofuran, perfluoro-5-butyltetrahydrofuran, and perfluorotetrahydropyran.

Preferred examples of perfluorocyclic ethers include perfluoro-5-ethyltetrahydrofuran and perfluoro-5-butyltetrahydrofuran.

The hydrofluoroether is, for example, a fluorine-containing ether.

The hydrofluoroether preferably has a global warming potential (GWP) of 400 or less, and more preferably 300 or less.

Examples of hydrofluoroethers include $CF_3CF_2CF_2CF_2OCH_3$, $CF_3CF_2CF(CF_3)OCH_3$, $CF_3CF(CF_3)CF_2OCH_3$, $CF_3CF_2CF_2CF_2OC_2H_5$, $CF_3CH_2OCF_2CHF_2$, $C_2F_5CF(OCH_3)$ $C_3F_7$, $(CF_3)_2CHOCH_3$, $(CF_3)_2CFOCH_3$, $CHF_2CF_2OCH_2CF_3$, $CHF_2CF_2CH_2OCF_2CHF_2$, $CF_3CHFCF_2OCH_3$, $CF_3CHFCF_2OCF_3$, trifluoromethyl 1,2,2,2-tetrafluoroethyl ether (HFE-227me), difluoromethyl 1,1,2,2,2-pentafluoroethyl ether (HFE-227mc), trifluoromethyl 1,1,2,2-tetrafluoroethyl ether (HFE-227pc), difluoromethyl 2,2,2-trifluoroethyl ether (HFE-245mf), 2,2-difluoroethyltrifluoromethyl ether (HFE-245pf), 1,1,2,3,3,3-hexafluoropropylmethyl ether ($CF_3CHFCF_2OCH_3$), 1,1,2,2-tetrafluoroethyl 2,2,2-trifluoroethyl ether ($CHF_2CF_2OCH_2CF_3$), and 1,1,1,3,3,3-hexafluoro-2-methoxypropane ($(CF_3)_2CHOCH_3$).

Preferred examples of hydrofluoroethers include $CF_3CF_2CF_2CF_2OCH_3$, $CF_3CF_2CF_2CF_2OC_2H_5$, $CF_3CH_2OCF_2CHF_2$, and $C_2F_5CF(OCH_3)C_3F_7$.

The hydrofluoroether is preferably a compound represented by the following formula (B1):

$$R^{21}\text{-O-}R^{22} \qquad \text{(B1)},$$

wherein $R^{21}$ is linear or branched perfluorobutyl and $R^{22}$ is methyl or ethyl.

The olefin compound containing at least one chlorine atom is a $C_2$-$C_4$ (preferably $C_2$-$C_3$) olefin compound containing at least one chlorine atom in its structure. The olefin compound containing at least one chlorine atom is a compound in which at least one of the hydrogen atoms bonded to the carbon atoms in a $C_2$-$C_4$ hydrocarbon having one or two (preferably one) carbon-carbon double bonds (C=C) is replaced with chlorine. A compound in which at least one of the hydrogen atoms bonded to two carbon atoms constituting the carbon-carbon double bond in a $C_2$-$C_4$ hydrocarbon is replaced with chlorine is preferred.

The number of chlorine atoms is one to the maximum substitutable number. The number of chlorine atoms may be, for example, one, two, three, four, or five.

The olefin compound containing at least one chlorine atom may contain at least one (e.g., one, two, three, four, or five) fluorine atom.

Examples of olefin compounds containing at least one chlorine atom include $CH_2$=CHCl, CHCl=CHCl, $CCl_2$=CHCl, $CCl_2$=$CCl_2$, $CF_3CH$=CHCl, $CHF_2CF$=CHCl, $CFH_2CF$=CHCl, $CF_3CCl$=CFCl, $CF_2HCl$=CFCl, and $CFH_2Cl$ =CFCl .

Preferred examples of olefin compounds containing at least one chlorine atom include CHCl=CHCl, $CHF_2CF$=CHCl, $CF_3CH$=CHCl, and $CF_3CCl$=CFCl.

As the aprotic solvent, a hydrofluoroether is preferable because it has less environmental impact during use and polymers can be dissolved at high concentrations in it.

Preferred examples of polymerization initiators used in production of the fluoropolymer include di-n-propyl peroxydicarbonate, diisopropyl peroxydicarbonate, diisobutyryl peroxide, di(ω-hydro-dodecafluoroheptanoyl)peroxide, di(ω-hydro-hexadecafluorononanoyl)peroxide, ω-hydro-dodecafluoroheptanoyl-ω-hydro-hexadecafluorononanoyl-peroxide, benzoyl peroxide, tert-butyl peroxypivalate, tert-hexyl peroxypivalate, ammonium persulfate, sodium persulfate, and potassium persulfate.

Particularly preferred examples of polymerization initiators include di-n-propyl peroxydicarbonate, diisopropyl peroxydicarbonate, diisobutyryl peroxide, di(ω-hydro-dodecafluoroheptanoyl)peroxide, benzoyl peroxide, tert-butyl peroxypivalate, tert-hexyl peroxypivalate, and ammonium persulfate.

The amount of the polymerization initiator for use in the polymerization reaction can be, for example, 0.0001 g or more and 0.05 g or less, preferably 0.0001 g or more and 0.01 g or less, and more preferably 0.0005 g or more and 0.008 g or less, per gram of all of the monomers subjected to the reaction.

The temperature of the polymerization reaction can be, for example, -10°C or higher and 160°C or lower, preferably 0°C or higher and 160°C or lower, and more preferably 0°C or higher and 100°C or lower.

The reaction time for the polymerization reaction is preferably 0.5 hours or more and 72 hours or less, more preferably 1 hour or more and 48 hours or less, and even more preferably 3 hours or more and 30 hours or less.

The polymerization reaction can be performed in the presence or absence of an inert gas (e.g., nitrogen gas), and preferably in the presence of an inert gas.

The polymerization reaction can be performed under reduced pressure, atmospheric pressure, or increased pressure.

The polymerization reaction can be performed by adding one or more monomers to an aprotic solvent containing a polymerization initiator and subjecting it to polymerization conditions. The polymerization reaction can also be performed

by adding a polymerization initiator to an aprotic solvent containing one or more monomers and subjecting it to polymerization conditions.

The fluoropolymer produced by the polymerization reaction may be purified, if desired, by a conventional method, such as extraction, dissolution, concentration, filtration, precipitation, reprecipitation, dehydration, adsorption, or chromatography, or a combination of these methods. Alternatively, a solution of the fluoropolymer produced by the polymerization reaction, a dilute solution thereof, or a mixture of the solution with other optional components or the like may be dried or heated (e.g., 30°C or higher and 150°C or lower) to form an insulating film or dielectric film containing the fluoropolymer.

The content of the fluoropolymer in the insulating film or dielectric film can be, for example, 50 mass% or more and 100 mass% or less, preferably 60 mass% or more and 100 mass% or less, more preferably 80 mass% or more and 100 mass% or less, and particularly preferably 90 mass% or more and 100 mass% or less, based on the total mass of the insulating film or dielectric film.

The insulating film or dielectric film may comprise other components in addition to the fluoropolymer. Such other components may be known components according to the use of the insulating film or dielectric film, such as wetting agents, levelling agents, colorants, light-diffusing agents, fillers, plasticizers, viscosity modifiers, flexibilizers, light-resistant stabilizers, reaction inhibitors, and adhesion promoters.

The insulating film or dielectric film may comprise other components in appropriate amounts as long as the effects of the present disclosure are obtained. The content of the other components can be, for example, 0 mass% or more and 50 mass% or less, preferably 0 mass% or more and 40 mass% or less, more preferably 0 mass% or more and 20 mass% or less, and particularly preferably 0 mass% or more and 10 mass% or less, based on the total mass of the insulating film or dielectric film.

The insulating film or dielectric film can be produced, for example, by subjecting a liquid obtained by dissolving or dispersing the fluoropolymer in a solvent to drying or heating to remove the solvent from the liquid. Preferably, the insulating film or dielectric film can be produced by removing the solvent from the coating agent of the present disclosure described below.

The thickness of the insulating film or dielectric film can be appropriately selected according to the functions etc. required for the insulating film or dielectric film, and can be, for example, 10 nm or more, 10 nm or more and 1000 μm or less, 30 nm or more and 500 μm or less, or 50 nm or more and 500 μm or less. The thickness can be preferably 100 nm or more and 500 μm or less, more preferably 500 nm or more and 300 μm or less, even more preferably 800 nm or more and 200 μm or less, and particularly preferably 10 μm or more and 200 μm or less. When the average film thickness is within these ranges, it is advantageous in terms of abrasion resistance.

The insulating film or dielectric film can have a relative permittivity at 6 GHz of, for example, 1.5 or more and 2.5 or less, preferably 1.7 or more and 2.3 or less, and more preferably 1.8 or more and 2.2 or less.

The insulating film or dielectric film can have a relative permittivity at 10 GHz of, for example, 1.5 or more and 2.5 or less, preferably 1.7 or more and 2.3 or less, and more preferably 1.8 or more and 2.2 or less.

The insulating film or dielectric film can have a relative permittivity at 20 GHz of, for example, 1.5 or more and 2.5 or less, preferably 1.7 or more and 2.3 or less, and more preferably 1.8 or more and 2.2 or less.

The insulating film or dielectric film can have a relative permittivity at 28 GHz of, for example, 1.5 or more and 2.5 or less, preferably 1.7 or more and 2.3 or less, and more preferably 1.8 or more and 2.2 or less.

At least one of the relative permittivity at 6 GHz, the relative permittivity at 10 GHz, the relative permittivity at 20 GHz, and the relative permittivity at 28 GHz of the insulting or dielectric film can be, for example, 1.5 or more and 2.5 or less, preferably 1.7 or more and 2.3 or less, and more preferably 1.8 or more and 2.2 or less.

The relative permittivity at 6 GHz, the relative permittivity at 10 GHz, the relative permittivity at 20 GHz, and the relative permittivity at 28 GHz of the insulting or dielectric film can all be, for example, 1.5 or more and 2.5 or less, preferably 1.7 or more and 2.3 or less, and more preferably 1.8 or more and 2.2 or less.

The insulating film or dielectric film can have a dielectric dissipation factor at 6 GHz of, for example, 0.0002 or less, preferably 0.00005 or more and 0.0002 or less, and more preferably 0.00007 or more and 0.0002 or less.

The insulating film or dielectric film can have a dielectric dissipation factor at 10 GHz of, for example, 0.0002 or less, preferably 0.00005 or more and 0.0002 or less, and more preferably 0.00007 or more and 0.0002 or less.

The insulating film or dielectric film can have a dielectric dissipation factor at 20 GHz of, for example, 0.0002 or less, preferably 0.00005 or more and 0.0002 or less, and more preferably 0.00007 or more and 0.0002 or less.

The insulating film or dielectric film can have a dielectric dissipation factor at 28 GHz of, for example, 0.0002 or less, preferably 0.00005 or more and 0.0002 or less, and more preferably 0.00007 or more and 0.0002 or less.

At least one of the dielectric dissipation factor at 6 GHz, the dielectric dissipation factor at 10 GHz, the dielectric dissipation factor at 20 GHz, and the dielectric dissipation factor at 28 GHz of the insulating film or dielectric film can be, for example, 0.0002 or less, preferably 0.00005 or more and 0.0002 or less, and more preferably 0.00007 or more and 0.0002 or less.

The dielectric dissipation factor at 6 GHz, the dielectric dissipation factor at 10 GHz, the dielectric dissipation

factor at 20 GHz, and the dielectric dissipation factor at 28 GHz of the insulating film or dielectric film can all be, for example, 0.0002 or less, preferably 0.00005 or more and 0.0002 or less, and more preferably 0.00007 or more and 0.0002 or less.

The volume resistivity of the insulating film or dielectric film can be, for example, $1.0 \times 10^{15}$ Ω·cm or more, preferably $1.0 \times 10^{15}$ Ω·cm or more and $1.0 \times 10^{17}$ Ω·cm or less, and more preferably $1.0 \times 10^{15}$ Ω·cm or more and $1.5 \times 10^{16}$Ω·cm or less.

The insulating film or dielectric film has a high indentation hardness based on comprising the fluoropolymer. The insulating film or dielectric film has an indentation hardness of, for example, 250 $N/mm^2$ or more and 1000 $N/mm^2$ or less, preferably 300 $N/mm^2$ or more and 800 $N/mm^2$ or less, and more preferably 350 $N/mm^2$ or more and 600 $N/mm^2$ or less.

The insulating film or dielectric film can have an indentation elastic modulus of, for example, 2.5 GPa or more and 10 GPa or less, preferably 2.5 GPa or more and 8 GPa or less, and more preferably 2.5 GPa or more and 6 GPa or less.

Since the fluoropolymer has high permeability, the insulating film or dielectric film can be used as an optical material. The insulating film or dielectric film can have a total light transmittance of, for example, 90% or more and 99% or less, preferably 92% or more and 99% or less, and more preferably 94% or more and 99% or less.

Since the fluoropolymer also has high ultraviolet transmittance, the insulating film or dielectric film can also be used as an optical material for ultraviolet light. The transmittance of the insulating film or dielectric film at 193 nm or more and 410 nm or less can be, for example, 60% or more, and preferably 70% or more.

The insulating film can be used, for example, as an insulating film for semiconductors, such as a gate insulating film, an interlayer insulating film, an insulating film formed after resist stripping and cleaning, an insulating film laminated on a printed circuit board, an insulating film for ceramic circuit boards, a film capacitor, and an insulating film for signal line (e.g. electric wire) coating materials.

The insulating film or dielectric film can be used as a dielectric insulating layer in high-frequency transmission lines. An example of high-frequency transmission lines is a millimeter wave radar substrate for automatic operation. The insulating film or dielectric film has a low dielectric dissipation factor and low relative permittivity, which can improve the sensitivity of in-vehicle radar.

The insulating film can be used as an insulator for high-speed communication boards. As can be understood from the following formula, which shows the transmission loss of high-frequency electrical signals, the transmission loss can be reduced by lowering the relative permittivity or dielectric dissipation factor.

$$\text{Dielectric (insulator) loss} \propto f \times \sqrt{Dk} \times Df$$

| | |
|---|---|
| f : | Frequency (Hz) |
| Dk: | Permittivity |
| Df: | Dielectric dissipation factor |

In particular, the dielectric dissipation factor is important. Even if the relative permittivity is reduced to 1/2, the transmission loss is only reduced about 0.7-fold. In contrast, the dielectric dissipation factor is linearly reflected. Accordingly, if the dielectric dissipation factor is reduced to 1/2, the transmission loss is also reduced to 1/2, and a material with a low dielectric dissipation factor can more effectively reduce the transmission loss. Since the dielectric film of the present disclosure has a low dielectric dissipation factor, the film is advantageous as an insulator for high-speed communication boards.

Examples of such high-speed communication boards include base station antenna boards, antenna distribution boards, RRH (Remote Radio Head) boards, which are the radio part of wireless base stations, control unit or base band unit (BBU: Base Band Unit) boards of wireless base stations, high-speed communication transceiver boards, RNC (Radio Network Controller) boards, high-speed transmitter boards, high-speed receiver boards, high-speed signal multiplexing circuit boards, WiFi G boards using a 60-GHz band, data transmission boards used in servers for data centers, and the like.

Other examples of high-speed communication boards include antenna boards, such as super multi-element antennas (Massive MIMO) boards for high-capacity communications required for 5G standards or beyond.

The insulating film can be used not only as an insulator for boards, but also as an insulator for signal line coating materials. For example, the insulating film can be used as an insulation coating material (e.g., insulating tube) for waveguides transmitting high-speed signals, QSFP cables for high-speed LAN, coaxial cables for high-speed communication (e.g., SFP+ cables, QSFP+ cables, etc.), and low-loss coaxial cables.

When such high frequencies are used, electrical components such as connectors and materials used for communication equipment, such as casings, are required to have electrical properties such as being stable and having low relative permittivity ($\varepsilon r$) and low dielectric dissipation factor (tan $\delta$). The insulating film can be used as an insulating material for such materials.

The insulating film can be used as an insulating material for connector printed circuit boards that require soldering. Since the insulating material has excellent heat resistance, problems are unlikely to occur even at high temperatures during soldering.

In dielectric waveguide lines, materials with low dielectric loss are required to transmit high-frequency millimeter or submillimeter waves with low loss. The dielectric film can be used as an insulating material for dielectric waveguide lines that transmit millimeter waves, submillimeter waves, etc. Examples of dielectric waveguide lines include cylindrical dielectric lines, square dielectric lines, elliptical dielectric lines, tubular dielectric lines, image lines, insular image lines, trapped image lines, rib guides, strip dielectric lines, reverse strip lines, H guides, non-radiating dielectric lines (NRD guides), and others.

## Electrical Articles

One embodiment of the present disclosure is an electrical article comprising the insulating film or dielectric film. In the present specification, the "electrical article" is a generic term for electrical products and components of electrical products (also simply referred to as "components"). The components include electronic components.

Based on comprising the insulating film or dielectric film, electrical products can have excellent insulation and thus can be highly reliable products. Based on comprising the insulating film or dielectric film, the components thereof can have high insulation. Further, based on comprising the insulating film or dielectric film, the components can have high transparency and thus can be used as optical components.

The electrical article of the present disclosure may be the same as a conventional electrical product or a component thereof comprising the insulating film or dielectric film, except that the insulating film or dielectric film of the conventional electrical product or the component thereof is replaced by the insulating film or dielectric film described above.

The electrical product may be any product that exhibits a certain function upon energization, and is not particularly limited. Examples of electrical products include household electrical products, commercial electrical products, business electrical products, and the like. Examples of preferred electrical products include products comprising semiconductors or printed circuit boards, such as home appliances, automotive electrical equipment, electrical equipment for OA (office automation), and the like.

The component can be any part required to have insulation provided by an insulating film or dielectric film, such as electronic parts, touch panel parts, solar cell panel parts, display parts, and like various parts. Specific examples of components include semiconductors, printed circuit boards, element encapsulants, element protective films, and the like.

## Coating Agent

One embodiment of the present disclosure is a coating agent for forming the insulating film or dielectric film comprising a specific fluoropolymer.

The coating agent can contain a fluoropolymer and an aprotic solvent.

The fluoropolymer in the coating agent may be the fluoropolymer described above in the insulating film or dielectric film. Accordingly, the details of the fluoropolymer in the insulating film or dielectric film are applicable to the details of the fluoropolymer in the coating agent.

The content of the fluoropolymer in the coating agent can be, for example, 5 mass% or more and 65 mass% or less, 10 mass% or more and 65 mass% or less, 20 mass% or more and 65 mass% or less, 30 mass% or more and 65 mass% or less, more than 30 mass% and 65 mass% or less, or 20 mass% or more and 40 mass% or less, based on the total mass of the coating agent. The content is preferably more than 20 mass% and 65 mass% or less, more preferably 25 mass% or more and 60 mass% or less, and particularly preferably 30 mass% or more and 50 mass% or less.

The aprotic solvent in the coating agent may be the aprotic solvent described above in the insulating film or dielectric film. Accordingly, the details of the aprotic solvent in the insulating film or dielectric film are applicable to the details of the aprotic solvent in the coating agent.

The content of the aprotic solvent in the coating agent can be, for example, 35 mass% or more and 95 mass% or less, 35 mass% or more and 90 mass% or less, 35 mass% or more and 80 mass% or less, 35 mass% or more and 70 mass% or less, 35 mass% or more and less than 70 mass%, or 60 mass% or more and 80 mass% or less, based on the total mass of the coating agent. The content is preferably 35 mass% or more and less than 80 mass%, more preferably 40 mass% or more and 75 mass% or less, and particularly preferably 50 mass% or more and 70 mass% or less.

The coating agent may comprise a polymerization initiator. The polymerization initiator in the coating agent may be the polymerization initiator described above in the insulating film or dielectric film. Therefore, the details of the

polymerization initiator in the insulating film or dielectric film are applicable to the details of the polymerization initiator in the coating agent.

The content of the polymerization initiator in the coating agent is, for example, 0.00001 mass% or more and 10 mass% or less, preferably 0.00005 mass% or more and 10 mass% or less, and more preferably 0.0001 mass% or more and 10 mass% or less, based on the total mass of the coating agent.

The coating agent may comprise the fluoropolymer and an aprotic solvent, and optionally a polymerization initiator and optionally other components, in appropriate amounts. Examples of other components can include colorants, light-diffusing agents, fillers, plasticizers, viscosity modifiers, flexibilizers, light-resistant stabilizers, reaction inhibitors, adhesion promoters, and the like. The content of the other components can be, for example, 0.01 mass% or more and 50 mass% or less, preferably 0.01 mass% or more and 30 mass% or less, more preferably 0.01 mass% or more and 20 mass% or less, based on the total mass of the coating agent.

The coating agent can be produced by mixing the fluoropolymer and an aprotic solvent, optionally with a polymerization initiator and optionally with other components.

The coating agent can be produced by mixing a polymerization reaction mixture obtained by the solution polymerization of the fluoropolymer described above (this reaction mixture contains at least a fluoropolymer and an aprotic solvent) optionally with an aprotic solvent and/or other components. When solution polymerization is performed, the fluoropolymer concentration or the amount of fluoropolymer dissolved in the polymerization reaction mixture can be increased, and the step of isolating the fluoropolymer from the polymerization reaction mixture can be omitted. Therefore, the coating agent preferably contains a polymerization reaction mixture obtained by solution polymerization.

In the coating agent, the content of the polymerization reaction mixture of solution polymerization can be appropriately selected according to the concentration of the fluoropolymer in the polymerization reaction mixture and the functions, thickness, etc. of the insulating film or dielectric film to be produced. The content of the polymerization reaction mixture of solution polymerization in the coating agent can be, for example, 5 mass% or more and 100 mass% or less, preferably 20 mass% or more and 100 mass% or less, and more preferably 30 mass% or more and 100 mass% or less, based on the total mass of the coating agent.

The coating agent comprising an aprotic solvent in which the fluoropolymer is dissolved or dispersed can form an insulating film or dielectric film, for example, by applying the coating agent to a portion in which the formation of an insulating film or dielectric film is required by an appropriate method (e.g., spray coating, dip coating, bar coating, gravure coating, roll coating, ink jet, spin coating, etc.), and then drying, heating, etc. to remove the solvent. After application of the coating agent, heating is preferably performed. The drying or heating temperature is, for example, 30°C or higher and 150°C or lower, and preferably 30°C or higher and 80°C or lower.

For example, an insulating film or dielectric film can be formed by applying the coating agent of the present disclosure and then drying in a dryer at 80°C. Alternatively, after an insulating film or dielectric film is formed by using the coating agent of the present disclosure, one or more other layers can be formed on this film.

Although embodiments are described above, it will be understood that various modifications in form and details can be made without departing from the spirit and scope of the claims.

## Examples

Embodiments of the present disclosure are described in more detail below with Examples; however, the present disclosure is not limited to these.

The symbols and abbreviations in the Examples are used with the following meanings.

Initiator solution (1): a methanol solution containing 50 mass%
di-n-propyl peroxydicarbonate (10-hour half-life temperature: 40°C)
Fluoropolymer (1-11): a polymer composed of unit (1-11)
Mw: mass average molecular weight

### GPC Analysis Method (Measurement of Mass Average Molecular Weight of Fluoropolymer)

#### Sample Preparation Method

A polymer was dissolved in perfluorobenzene to prepare a 2 mass% polymer solution, and the polymer solution was passed through a membrane filter (0.22 μm) to obtain a sample solution.

Measurement Method

Standard sample for measurement of molecular weight: polymethyl methacrylate

Detection method: RI (differential refractometer)

Confirmation of Polymer Solubility

Whether the polymer was dissolved in the liquid was determined as follows.

Each of the prepared liquids was visually observed, and when no undissolved polymer was observed and the entire liquid flowed uniformly at room temperature, it was determined that the polymer was dissolved.

Average Film Thickness

The average film thickness was defined as the average value of thickness measured 5 times with a micrometer. When measuring the thickness of a film itself was difficult, such as when a film formed on a base material of a substrate etc. could not be peeled off, the average film thickness was calculated by measuring the thickness of the base material before film formation and the thickness of the base material after film formation (the sum of the film thickness and the base material thickness) 5 times each with a micrometer, and subtracting the average value of the thickness before film formation from the average value of the thickness after film formation.

Relative Permittivity and Dielectric Dissipation Factor

The relative permittivity and dielectric dissipation factor at frequencies of 10, 20, 28, 60, and 80 GHz were determined by a split-cylinder resonator method. A resonator corresponding to each frequency produced by Kanto Electronic Application and Development Inc. was used as the split cylinder, and a Keysight N5290A was used as the network spectrum analyzer. For measurement at 10 GHz, a film with a thickness of 100 μm, a width of 62 mm, and a length of 75 mm was used as the sample to be measured, and for measurement at 20, 28, 60, and 80 GHz, a film with a thickness of 100 μm, a width of 34 mm, and a length of 45 mm was used as the sample to be measured. The measurement temperature was 25°C.

The relative permittivity and dielectric dissipation factor at 6 GHz were measured using a cavity resonator produced by Kanto Electronic Application and Development Inc. The sample was formed into a cylinder shape (2 mm dia. × 110 mm).

The real part of the complex relative permittivity was determined from the change in the resonance frequency indicated by the cavity resonator, and the imaginary part of the complex relative permittivity was determined from the change in the Q value. The relative permittivity and dielectric dissipation factor were then calculated according to the following formulas.

$$\varepsilon_r^* = \varepsilon_r' - j\varepsilon_r''$$

$$\varepsilon_r' = \varepsilon_r$$

$$\varepsilon_r'' = \varepsilon_r \tan\delta$$

$$\tan\delta = \frac{\varepsilon_r''}{\varepsilon_r'}$$

In the formulas, $\varepsilon_r$* represents a complex relative permittivity, $\varepsilon_r$' represents a relative permittivity, $\varepsilon_r$" represents a relative dielectric loss factor, and tan δ represents a dielectric dissipation factor.

The relative permittivity and dielectric dissipation factor at 1 kHz were determined as follows.

Aluminum was deposited on both sides of each film *in vacuo* to make a sample. The static capacitance and dielectric dissipation factor of this sample were measured at a frequency of 1 kHz at 25°C with an LCR meter. The dielectric permittivity was calculated from each static capacitance obtained.

Volume resistivity

Each sample was sandwiched between a lower electrode and an upper electrode provided in a thermostatic chamber. An electric field of 50 V/μm was applied to each film with a digital super insulation/microcurrent meter (DSM-8104; produced by Hioki Electric Co., Ltd.), the leakage current was measured, and the volume resistivity at 25°C was calculated. Specifically, the volume resistivity is a value determined by the method described in a specific example of the present disclosure.

Indentation Hardness and Indentation Elastic Modulus

The indentation hardness ($H_{IT}$; indentation hardness) of each sample was measured using an ENT-2100 ultra-fine hardness tester produced by Nanotec Corporation. The indentation elastic modulus was also measured at the same time. The test was performed by adjusting the indentation depth to be 1/10 or less of the thickness.

Measurement Method for Total Light Transmittance and Haze

The total light transmittance and haze were measured using an NDH 7000SPII haze meter (produced by Nippon Denshoku Industries Co., Ltd.) in accordance with JIS K7136 (haze value) and JIS K7361-1 (total light transmittance). A film with an average film thickness of 100 μm was used as the sample to be measured. The sample was produced by coating a glass plate with a coating agent such that the thickness after drying was 100 μm, performing drying at 80°C for 4 hours, and peeling off the resulting dried film with an average film thickness of 100 μm from the glass plate.

Transmittance at Each Wavelength

The transmittance of each sample (film with an average film thickness of 100 μm) at a specific wavelength was measured using a Hitachi U-4100 spectrophotometer. An integrating sphere detector was used as the detector.

Water Absorption (24°C)

The weight of a sample that had been thoroughly dried beforehand was measured and set as W0. The sample was then completely immersed in 24°C water whose mass was 100 times the mass of W0 or more. The weight of the sample after 24 hours was measured and set as W24. The water absorption was determined from the following formula.

$$\text{Water absorption (\%)} = 100 \times (W24 - W0)/W0$$

Water Absorption (60°C)

The weight of a sample that had been thoroughly dried beforehand was measured and set as W0, and then completely immersed in 60°C water whose mass was 100 times the mass of W0 or more. The weight of the sample after 24 hours was measured and set as W24. The water absorption was determined from the following formula.

$$\text{Water absorption (\%)} = 100 \times (W24 - W0)/W0$$

Tensile Elastic Modulus

A sample (length: 30 mm, width: 5 mm, thickness: 0.1 mm) was measured with a DVA220 dynamic viscoelasticity measuring device produced by IT Measurement Control Co., Ltd. under the conditions of a tensile mode, a grip width of 20 mm, a measurement temperature of 25°C to 150°C, a temperature-increasing rate of 2°C/min, and a frequency of 1 Hz. The elastic modulus value at 25°C was defined as a tensile elastic modulus.

Tensile Strength

The tensile strength of a film was measured using an autograph AGS-100NX produced by Shimadzu Corporation. The sample was cut to a dumbbell shape 5B as stated in JIS K7162. The measurement was performed under the conditions of a chuck-to-chuck distance of 12 mm, a crosshead speed of 1 mm/min, and room temperature.

Thermal Decomposition Temperature

The temperatures at which the mass loss percentage of a sample became 0.1% and 5% were measured at a temperature-increasing rate of 10°C/minute in an air atmosphere using a thermogravimetric-differential thermal analyzer (Hitachi High-Tech Science Corporation; STA7200).

Glass Transition Temperature (Tg)

The temperature was increased (first run), decreased, and then increased (second run) at 10°C/minute in the temperature range of 30°C or higher and 200°C or lower using a DSC (differential scanning calorimeter; Hitachi High-Tech Science Corporation, DSC7000). The midpoint of the endothermic curve in the second run was determined to be the glass transition temperature (°C).

Coefficient of Linear Expansion

A thermomechanical analyzer (TMA8310; produced by Rigaku Corporation) was set in a tensile mode with a chuck-to-chuck distance of 15 mm. A sample cut to a size of 5 mm in width and 20 mm in length was held with the chucks, and the temperature was increased from room temperature to 150°C (1st up), decreased to room temperature, and then increased to 150°C (2nd up) at 2°C/minute. The average coefficient of linear expansion at 25°C or higher and 80°C or lower in the 2nd up was determined and defined as the coefficient of linear expansion.

Preparation Example 1: Polymerization of Fluoropolymer Comprising Unit (1-11) as Main Component and Production of Polymer Solution

(Polymerization Reaction Mixture)

The monomer (M1-11) (10 g), ethyl nonafluorobutyl ether (20 g) as a solvent, and the initiator solution (1) (0.041 g) were placed in a 50-mL glass container, and a polymerization reaction was then performed for 20 hours while the mixture was heated such that the internal temperature was 40°C, thereby producing a fluoropolymer (1-11) (9.0 g, Mw: 97533). The fluoropolymer in the polymerization reaction mixture was dissolved, and the concentration was 31 mass%.

The weight of the polymer in the composition was measured by distilling off the unreacted starting material, the solvent, the initiator residue, and the impurities contained in a trace amount in the monomer by vacuum drying at 120°C after the completion of the polymerization reaction.

Preparation Example 2: Polymerization of Fluoropolymer Comprising Unit (1-11) as Main Component and Production of Polymer Solution

(Polymerization Reaction Mixture)

The monomer (M1-11) (10 g), perfluorotripropylamine (10 g) as a solvent, and the initiator solution (1) (0.052 g) were placed in a 20-mL glass container, and a polymerization reaction was then performed for 20 hours while the mixture was heated such that the internal temperature was 40°C, thereby producing a fluoropolymer (1-11) (9.5 g, Mw: 213475). The fluoropolymer in the reaction mixture was dissolved, and the concentration was 49 mass%.

The weight of the polymer in the composition was measured by distilling off the unreacted starting material, the solvent, the initiator residue, and the impurities contained in a trace amount in the monomer by vacuum drying at 120°C after the completion of the polymerization reaction.

Preparation Example 3

Ethyl nonafluorobutyl ether was further added to the polymerization reaction mixture obtained in Preparation Example 1 to obtain a solution of fluoropolymer at a concentration of 10 mass%.

Comparative Preparation Example 1: Production of Teflon

(Registered Trademark) Solution

Teflon (registered trademark) AF1600 (2.0 g, Mw: 229738), which is a commercially available fluoropolymer, was added to methyl nonafluorobutyl ether (8.0 g), and the mixture was stirred at room temperature for 2 days to prepare

a uniformly dissolved solution.

Teflon (registered trademark) AF1600 contains the monomer unit represented by the following formula (10) and the monomer unit represented by the following formula (20) in a ratio of 65:35 (molar ratio).

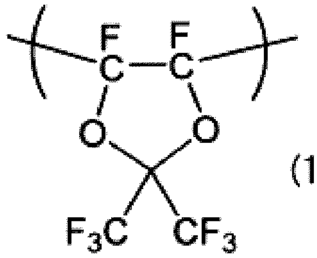
(10)

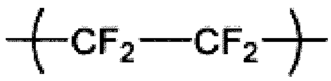
(20)

Example 1

The polymerization reaction mixture obtained in Preparation Example 1 was directly used as a coating agent, and a silicon wafer was produced as follows.

The silicon wafer was spin-coated with the coating agent at a spin speed of 500 rpm for 2 seconds using a spin coater, and further spin-coated at 1000 rpm for 25 seconds. Subsequently, heating was performed at 80°C for 2 hours, thereby obtaining a silicon wafer having a uniform, transparent fluoropolymer (1-11) film (average film thickness: 0.85 μm) formed thereon.

Example 2

The polymerization reaction mixture obtained in Preparation Example 1 was directly used as a coating agent, and a film was produced as follows.

A glass substrate was coated with the coating agent such that the thickness after drying was 100 μm, and drying was performed at 80°C for 4 hours to form a transparent film. The film was then peeled off from the glass plate, thereby obtaining a fluoropolymer (1-11) film with an average film thickness of 100 μm. The electrical properties of the obtained film were measured and the following results were obtained.

Relative permittivity (1 kHz): 2.2
Dielectric dissipation factor (1 kHz): 0.0001
Relative permittivity (6 GHz): 1.99
Dielectric dissipation factor (6 GHz): 0.00012
Volume resistivity: $4 \times 10^{15}$ Ω·cm

The following items of the obtained film were also measured. The results are shown below.

Indentation hardness: 420 $N/mm^2$
Indentation elastic modulus: 3.3 GPa
Water absorption (24°C): 0.00%
Water absorption (60°C): 0.09%
Tensile modulus: 3.1 GPa
Tensile strength: 20.9 MPa
Thermal decomposition temperature (0.1%): 294.5°C
Thermal decomposition temperature (5%): 439.4°C
Glass transition temperature: 129°C
Coefficient of linear expansion: 80 ppm
Total light transmittance: 96%
Haze: 0.34%
Transmittance (193 nm): 74.4%
Transmittance (550 nm): 94.6%.

Example 3

The polymerization reaction mixture obtained in Preparation Example 1 was directly used as a coating agent,

and a film was produced as follows.

A glass substrate was coated with the coating agent such that the thickness after drying was 50 μm, and drying was performed at 80°C for 4 hours to form a transparent film. The film was then peeled off from the glass plate, thereby obtaining a fluoropolymer (1-11) film with an average film thickness of 50 μm. The electrical properties, indentation hardness, and indentation elastic modulus of the obtained film were measured, and the following results were obtained.

Relative permittivity (1 kHz): 2.3
Dielectric dissipation factor (1 kHz): 0.0005
Relative permittivity (6 kHz): 1.99
Dielectric dissipation factor (6 GHz): 0.00011
Specific induced resonance (10 GHz): 2.02
Dielectric dissipation factor (10 GHz): 0.00015
Relative permittivity (20 GHz): 2.11
Dielectric dissipation factor (20 GHz): 0.00016
Relative permittivity (28 GHz): 2.09
Dielectric dissipation factor (28 GHz): 0.00019
Relative permittivity (60 GHz): 2.12
Dielectric dissipation factor (60 GHz) 0.00036
Relative permittivity (80 GHz): 2.10
Dielectric dissipation factor (80 GHz): 0.00031
Volume resistivity: $9 \times 10^{15}$ Ω/cm
Hardness: 415 N/mm$^2$
Elasticity: 3.5 GPa

Other items were also measured as in Example 1, and the results were similar to those of Example 1.

Example 4

The polymerization reaction mixture obtained in Preparation Example 3 was directly used as a coating agent, and a film was produced as follows.

A glass substrate was coated with the coating agent such that the thickness after drying was 25 μm, and drying was performed at 80°C for 4 hours to form a transparent film. The film was then peeled off from the glass plate, thereby obtaining a fluoropolymer (1-11) film having an average film thickness of 25 μm. The electrical properties of the obtained film were measured. The results are shown below.

Relative permittivity (1 kHz): 2.3
Dielectric dissipation factor (1 kHz): 0.0003
Relative permittivity (6 GHz): 1.99
Dielectric dissipation factor (6 GHz): 0.00011
Volume resistivity $1 \times 10^{16}$ Ω·cm

Comparative Example 1

A Teflon (registered trademark) AF1600 film having an average film thickness: 50 μm) was formed in the same manner as in Example 1, except that the fluoropolymer solution obtained in Comparative Preparation Example 1 was used as the coating agent. The electrical properties, indentation hardness, and indentation elastic modulus of the obtained film were measured. The results are as follows.

Relative permittivity (1 kHz): 1.93
Dielectric dissipation factor (1 kHz): 0.0002
Relative permittivity (6 GHz): 1.99
Dielectric dissipation factor (6 GHz): 0.00025
Indentation hardness: 145 N/mm$^2$
Indentation elastic modulus: 2 GPa

Reference Example 1

The electrical properties, indentation hardness, and indentation elastic modulus of a Neoflon FEP NF-0100

film produced by Daikin Industries, Ltd. were measured. The results are as follows.

Relative permittivity (6 GHz): 1.99
Dielectric dissipation factor (6 GHz): 0.00031
Indentation hardness: 9.7 N/$mm^2$
Indentation elastic modulus: 0.02 GPa

**Claims**

1. An insulating film or dielectric film comprising a fluoropolymer, wherein

   the fluoropolymer comprises, as a main component, a monomer unit represented by formula (1):

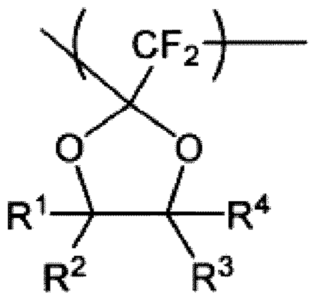

(1)

   wherein
   $R^1$ to $R^4$ are each independently a fluorine atom, a fluoroalkyl group, or a fluoroalkoxy group.

2. The insulating film or dielectric film according to claim 1, wherein the fluoropolymer further comprises a fluoroolefin unit.

3. The insulating film or dielectric film according to claim 2, wherein the fluoroolefin unit is at least one member selected from the group consisting of a fluorine-containing perhaloolefin unit, a vinylidene fluoride unit, a trifluoroethylene unit, a pentafluoropropylene unit, and a 1,1,1,2-tetrafluoro-2-propylene unit.

4. The insulating film or dielectric film according to claim 3, wherein the fluorine-containing perhaloolefin unit is at least one member selected from the group consisting of a chlorotrifluoroethylene unit, a tetrafluoroethylene unit, a hexafluoropropylene unit, a perfluoro(methyl vinyl ether) unit, a perfluoro(ethyl vinyl ether) unit, a perfluoro(propyl vinyl ether) unit, a perfluoro(butyl vinyl ether) unit, and a perfluoro(2,2-dimethyl-1,3-dioxol) unit.

5. The insulating film or dielectric film according to claim 2, wherein the fluoroolefin unit is at least one member selected from the group consisting of a chlorotrifluoroethylene unit, a tetrafluoroethylene unit, a hexafluoropropylene unit, a perfluoro(methyl vinyl ether) unit, and a perfluoro(propyl vinyl ether) unit.

6. The insulating film or dielectric film according to any one of claims 1 to 5, wherein the film has an average film thickness of 10 nm or more.

7. The insulating film or dielectric film according to any one of claims 1 to 6, wherein the film has

   a relative permittivity at 6 GHz of 1.5 or more and 2.5 or less;
   a dielectric dissipation factor at 6 GHz of 0.0002 or less;
   an indentation elastic modulus of 2.5 GPa or more and 10 GPa or less;
   an indentation hardness of 250 N/$mm^2$ or more and 1000 N/$mm^2$ or less; and
   a glass transition temperature of 110°C or higher.

8. The insulating film or dielectric film according to claim 7, wherein the film has a dielectric dissipation factor at 6 GHz of 0.00005 or more and 0.0002 or less.

9. The insulating film or dielectric film according to any one of claims 1 to 8, wherein the film has a volume resistivity of 1.0 x $10^{15}$ Ω·cm or more.

10. The insulating film or dielectric film according to any one of claims 1 to 9, wherein the film has a total light transmittance of 90% or more.

11. The insulating film or dielectric film according to any one of claims 1 to 10, wherein the film is for an electrical article or for a signal wire covering material.

12. The insulating film or dielectric film according to claim 11, wherein the film is for an electrical article, and the electrical article is a semiconductor.

13. The insulating film or dielectric film according to claim 11, wherein the film is for an electrical article, and the electrical article is a printed circuit board.

14. An electrical article comprising the insulating film or dielectric film of any one of claims 1 to 13.

15. A coating agent for forming the insulating film or dielectric film of any one of claims 1 to 13, the coating agent comprising a fluoropolymer and an aprotic solvent,
wherein

the fluoropolymer comprises, as a main component, a monomer unit represented by formula (1):

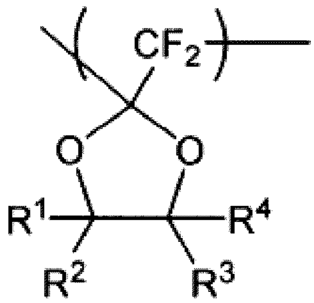

(1)

wherein $R^1$ to $R^4$ are each independently a fluorine atom, a fluoroalkyl group, or a fluoroalkoxy group.

16. The coating agent according to claim 15, wherein the content of the fluoropolymer is 20 mass% or more and 65 mass% or less based on the total mass of the coating agent.

17. The coating agent according to claim 15 or 16, wherein the aprotic solvent is at least one solvent selected from the group consisting of perfluoroaromatic compounds, perfluorotrialkylamines, perfluoroalkanes, hydrofluorocarbons, perfluorocyclic ethers, hydrofluoroethers, and olefin compounds containing at least one chlorine atom.

18. The coating agent according to any one of claims 15 to 17, wherein the aprotic solvent is at least one hydrofluoroether.

## INTERNATIONAL SEARCH REPORT

International application No.
PCT/JP2021/000255

A. CLASSIFICATION OF SUBJECT MATTER
C08F 24/00(2006.01)i; C09D 127/12(2006.01)i; H01B 3/44(2006.01)i; C09D 7/20(2018.01)i
FI: H01B3/44 C; C08F24/00; C09D7/20; C09D127/12
According to International Patent Classification (IPC) or to both national classification and IPC

B. FIELDS SEARCHED
Minimum documentation searched (classification system followed by classification symbols)
C08F24/00; C09D127/12; H01B3/44; C09D7/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 43-29154 B1 (E. I. DU PONT DE NEMOURS AND COMPANY) 13 December 1968 (1968-12-13) column 3, line 7 to column 4, the bottom line, example 3 | 1-18 |
| A | JP 2006-290779 A (ASAHI GLASS CO., LTD.) 26 October 2006 (2006-10-26) claims, paragraph [0050] | 1-18 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 February 2021 (03.02.2021) | 22 February 2021 (22.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2021/000255

| Patent Documents referred in the Report | Publication Date | Patent Family | Publication Date |
|---|---|---|---|
| JP 43-29154 B1 | 13 Feb. 1968 | (Family: none) | |
| JP 2006-290779 A | 26 Oct. 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002038075 A